# EUROPÄISCHE PATENTSCHRIFT

(11) **EP 1 855 413 B1**
(45) Veröffentlichungstag und Bekanntmachung des Hinweises auf die Patenterteilung: **20.10.2010**
(21) Anmeldenummer: 07008305.0
(22) Anmeldetag: 24.04.2007
(51) Int. Cl.: H04L 7/10, H04L 7/00, H04L 7/04, H04J 3/06, G01S 5/00, G08B 26/00, G08B 29/00

(54) **Verfahren zur Synchronisation einer bidirektionalen Übertragung von Daten**
Method for synchronising bi-directional data transmission
Procédé de synchronisation d'une transmission de données bidirectionnelle

(30) Priorität: 11.05.2006 DE 102006022284
(43) Veröffentlichungstag der Anmeldung: 14.11.2007
(73) Patentinhaber: SICK STEGMANN GmbH, 78166 Donaueschingen (DE)
(72) Erfinder: Francescon, Massimo, 10126 Torino (IT); Siraky, Josef, 78166 Donaueschingen (DE); Armbruster, Ulrich, 78166 Donaueschingen (DE)
(74) Vertreter: Patentanwälte Westphal, Mussgnug & Partner

(56) Entgegenhaltungen:
- EP-A- 0 100 386
- EP-A- 0 485 879
- EP-A- 0 902 546
- EP-A1- 1 434 382
- WO-A-95/14241
- US-A- 5 428 603
- US-A1- 2005 169 413

## Beschreibung

Die Erfindung betrifft ein Verfahren zur zeitlichen Synchronisation zwischen einem Triggerimpuls und einer Datenübertragung zwischen einem Sender und einem Empfänger gemäß dem Oberbegriff des Patentanspruchs 1.

Bekannt sind bidirektionale Datenübertragungsverfahren, mit welchen Daten zwischen einem Sender und einem Empfänger übertragen werden. Diese basieren auf der Übertragung von Frames einer vorgegebenen Bitlänge, wobei in jedem Frame eine vorgegebene erste Bitlänge für die Sendung von Daten von dem Sender zum Empfänger und eine vorgegebene zweite Bitlänge für die Sendung von Daten von dem Empfänger zum Senden vorgesehen ist. Beispielsweise kann ein Sender in der ersten Bitlänge Daten vom Empfänger anfordern, welche dieser dann in der zweiten Bitlänge an den Sender überträgt. Parallel dazu wird unabhängig von dem bidirektionalen Datenübertragungsverfahren ein Triggerimpuls vom Sender zum Empfänger übertragen, mit welchem eine Datenaufnahme, beispielsweise die Aufnahme der nachfolgend an den Sender zu übertragenen Daten, beim Empfänger getriggert wird. Der Triggerimpuls ist dabei vollständig unabhängig von der Datenübertragung zwischen dem Sender und dem Empfänger und insbesondere in seiner Impulslänge nicht exakt auf die Framelänge abgestimmt. Nach den bekannten Verfahren wird der Triggerimpuls digitalisiert und dann übertragen, wobei durch das Digitalisieren zeitliche Ungenauigkeiten in der Länge eines Bits auftreten können, beispielsweise etwa 1 µs. Derartige zeitliche Ungenauigkeiten sind jedoch für viele Anwendungen, beispielsweise hochauflösende Positionsmessungen beispielsweise mittels eines Encoders, inakzeptabel.

Als Stand der Technik werden die EP 1 434 382 A1, US 5,428,603 und EP 0 100 386 A1 genannt.

Die Aufgabe der Erfindung besteht daher darin, ein Verfahren bereitzustellen, bei welchem eine möglichst genaue Synchronisation zwischen dem Triggerimpuls und der Datenübertragung zwischen dem Sender und dem Empfänger ermöglicht wird.

Die Aufgabe der Erfindung wird gelöst durch ein Verfahren mit den Merkmalen des Patentanspruchs 1.

Vorteilhafte Ausgestaltungen und Weiterbildungen der Erfindung sind in den Unteransprüchen angegeben.

Das erfindungsgemäße Verfahren zur Synchronisation der bidirektionalen Übertragung von Daten zwischen einem Sender und einem Empfänger basierend auf der Übertragung von Frames einer vorgegebenen Bitlänge zeichnet sich dadurch aus, dass der Frame einen Zeitschlitz aufweist, in welchem weder von dem Sender an den Empfänger noch von dem Empfänger an den Sender Daten übertragen werden, und dass der Triggerimpuls in diesem Zeitschlitz vom Sender an den Empfänger übertragen wird. Somit entfällt das Digitalisieren des Triggerimpulses, da der Triggerimpuls direkt innerhalb des Zeitschlitzes an den Empfänger übertragen werden kann. Dadurch wird eine zeitliche Ungenauigkeit durch die Digitalisierung vermieden und eine exakte Synchronisation zwischen dem Triggerimpuls und der Datenaufnahme durch den Empfänger gewährleistet, da exakt zu dem Zeitpunkt, in welchem die Flanke des Triggerimpulses den Empfänger erreicht, die Datenaufnahme ohne zeitliche Verzögerungen, die durch die Digitalisierung des Triggerimpulses und die unabhängig von der Datenübertragung erfolgende Übertragung des Triggerimpulses verursacht werden, durchgeführt wird.

Bei der Erfindung ist der Zeitschlitz innerhalb des Frames innerhalb der ersten Bitlänge angeordnet. Damit ist gewährleistet, dass keine Daten vom Empfänger an den Sender übertragen werden, so dass keine zusätzlichen Zeitverzögerungsbits vonnöten sind.

Vorzugsweise beträgt die Länge des Zeitschlitzes 3 bis 8 Bit. Somit wird ein ausreichend langes Zeitfenster bereitgestellt, in welchem der Triggerimpuls, insbesondere die die Datenaufnahme beim Empfänger triggernde Flanke des Triggerimpulses, übertragen werden kann.

Vorteilhafterweise sind die erste Bitlänge und die zweite Bitlänge durch einige Zeitverzögerungsbits, vorzugsweise 4 bis 7 Zeitverzögerungsbits, getrennt in dem Frame angeordnet. Dadurch wird vermieden, dass der Empfänger bereits versucht, Daten an den Sender zu übertragen, während noch Daten vom Sender an den Empfänger übertragen werden.

In der Regel ist der Triggerimpulsabstand nicht exakt auf eine Framelänge abgestimmt. In diesem Fall würde zwar bei einer ersten Übertragung des Triggerimpulses eine Übertragung innerhalb des vorgesehenen Zeitschlitzes innerhalb des Frames erfolgen, während mehrerer Übertragungen würde sich jedoch der Triggerimpuls innerhalb des Zeitschlitzes verschieben. Um zu gewährleisten, dass der Triggerimpuls auch bei Abweichungen zwischen dem Triggerimpulsabstand und der Framelänge immer innerhalb des vorgesehenen Zeitschlitzes übertragen wird, werden bei einer besonders bevorzugten Ausführungsform der Erfindung in Abhängigkeit von dem Triggerimpulsabstand ein oder mehrere Stuff-Bits vorzugsweise direkt vor der ersten Bitlänge eingefügt. Die Zahl der einzufügenden Stuff-Bits wird dabei aus der Positionsverschiebung des Triggerimpulses innerhalb des Zeitschlitzes zwischen den vorhergehenden aufeinanderfolgenden Frames bestimmt.

Vorteilhafterweise werden die Stuff-Bits über mehrere Frames gleichmäßig verteilt eingefügt, insbesondere, wenn eine große Anzahl von Stuff-Bits vonnöten ist, so dass trotz der Einfügung von zusätzlichen Bits eine im wesentlichen gleichmäßige Datenübertragung gewährleistet werden kann.

Vorzugsweise werden, falls die Zahl der Stuff-Bits größer oder gleich N ist, jeweils N Stuff-Bits durch einen Synchronisations-Frame ersetzt. Derartige Synchronisations-Frames enthalten zusätzliche Informationen im Hinblick auf die Synchronisation zwischen Sender und Empfänger, beispielsweise eine vordefinierte Bitfolge, welche vom Empfänger erkannt und zur weiteren Synchronisation verwenden werden kann.

Vorzugsweise ist N gleich 5 oder 6, da bereits eine Bitfolge von fünf oder sechs Bits ausreichend ist, um weitere Information bezüglich der Synchronisation zwischen Sender und Empfänger auszutauschen.

Typischerweise beträgt die Länge der ersten Bitlänge mindestens 14 Bit, die Länge der zweiten Bitlänge 30 Bit. Die Länge eines Frames beträgt wenigstens 60 Bit und maximal 120 Bit, in Abhängigkeit von der Anzahl der eingefügten Stuff-Bits.

Vorzugsweise werden die Daten zwischen einer Steuerung des Senders und Messeinheiten des Empfängers ausgetauscht, wobei die Messeinheiten besonders bevorzugt als Positionsmesseinheiten ausgebildet sind, da gerade bei der Bestimmung von Positionen, beispielsweise in Drehgebern, eine hohe Genauigkeit und eine exakte Synchronisation zwischen dem Triggerimpuls und der Datenübertragung zwischen dem Sender und dem Empfänger vonnöten ist.
Das erfindungsgemäße System besteht aus einem Sender und einem Empfänger, zwischen welchen bidirektional Daten übertragen werden, wobei die Übertragung der Daten nach dem Verfahren gemäß einem der vorhergehenden Ansprüche abläuft. Dabei werden vorzugsweise die Daten zwischen einer Steuerung des Senders und Messeinheiten des Empfängers ausgetauscht wird, wobei insbesondere die Messeinheiten als Positionsmesseinheiten, vorzugsweise als Drehgeber, ausgebildet sind.

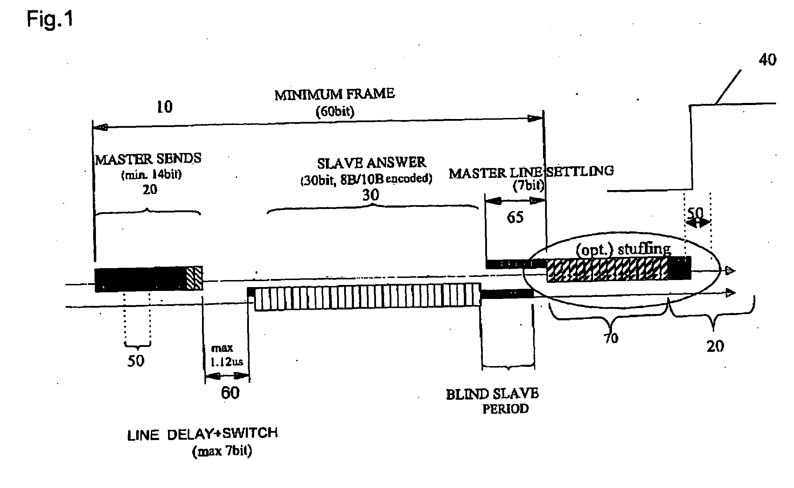

Die Erfindung wird anhand der nachfolgenden Figuren ausführlich erläutert. Es zeigt
- Figur 1: eine schematische Darstellung eines Frames gemäß der Erfindung.

Die Figur 1 zeigt einen Frame 10 mit einer regulären und damit minimalen Bitlänge von 60 Bit. Innerhalb des Frames 10 ist zu Beginn des Frames eine erste Bitlänge 20 angeordnet, welche üblicherweise eine Länge von mindestens 14 Bit aufweist und dafür vorgesehen ist, Daten von einem Sender zu einem Empfänger zu übertragen. Dabei kann es sich beispielsweise um eine Anforderung von Daten handeln.

Innerhalb des Frames 10 werden bidirektional Daten übertragen. Daher schließt sich an die erste Bitlänge 20 eine zweite Bitlänge 30 an, welche üblicherweise eine Länge von 30 Bit aufweist und welche dafür vorgesehen ist, Daten von dem Empfänger zu dem Sender zu übertragen. Beispielsweise werden in dieser zweiten Bitlänge die vom Sender angeforderten Daten vom Empfänger an den Sender übertragen. Dabei ist die zweite Bitlänge 30 graphisch höhenversetzt zu der ersten Bitlänge 20 dargestellt, um darzustellen, dass in diesem Fall die Daten in umgekehrter Richtung über die Datenleitung übertragen werden.

Vorteilhafterweise sind die erste Bitlänge 20 und die zweite Bitlänge 30 durch einige Zeitverzögerungbits 60, vorzugsweise durch vier bis maximal sieben Zeitverzögerungsbits 60 getrennt, welche sicherstellen, dass sich die Übertragung der Daten vom Empfänger zum Sender nicht mit der Übertragung der Daten vom Sender zum Empfänger überschneidet. Sieben Zeitverzögerungsbits 60 entsprechen dabei einer Zeitverzögerung von 1,12 µs.

Auch an die zweite Bitlänge 30 schließen sich einige Zeitverzögerungsbits 65, vorzugsweise vier bis maximal sieben Zeitverzögerungsbits 65 an, um auch hier ein Überkreuzen der Datenübertragung auszuschließen.

Innerhalb der ersten Bitlänge 20 ein Zeitschlitz 50 angeordnet, innerhalb welchem weder Daten von dem Sender an den Empfänger noch umgekehrt übertragen werden, in welchem jedoch der Triggerimpuls, insbesondere die Flanke des Triggerimpulses direkt von der Steuerung des Senders an den Empfänger übertragen wird. Dadurch entfällt ein Digitalisieren des Triggerimpulses, welches in einer zeitlichen Verzögerung resultieren könnte. Somit wird eine exakte Synchronisation zwischen dem Triggerimpuls und der durch den Triggerimpuls getriggerten Datenaufnahme beim Empfänger gewährleistet. Die Länge des Zeitschlitzes 50 beträgt etwa 3 bis 8 Bit, um auch bei möglichen Verschiebungen des Triggerimpulses 40 innerhalb des Zeitschlitzes 50 noch eine Übertragung des Triggerimpulses 40 innerhalb des Zeitschlitzes 50 zu gewährleisten. Die Länge der ersten Bitlänge 20 erhöht sich dadurch von regulär 14 Bit um die entsprechende Anzahl an Bits für den Zeitschlitz 50, weshalb die Länge der ersten Bitlänge 20 mit "mind. 14 Bit" angegeben ist.

Sind der Abstand der Triggerimpulse 40 und die Länge des Frames 10 exakt aufeinander abgestimmt, wird die Flanke des Triggerimpulses 40 innerhalb jedes Frames 10 relativ zum Frame 10 an der gleichen Position innerhalb des Zeitschlitzes 50 übertragen. Da jedoch der Triggerimpuls 40 unabhängig von der Datenübertragung zwischen dem Sender und dem Empfänger erzeugt wird, ist dies in der Regel nicht der Fall. Daher würde zwar bei einer ersten Übertragung des Triggerimpulses 40 eine Übertragung innerhalb des vorgesehenen Zeitschlitzes 50 innerhalb des Frames 10 erfolgen, nach der Übertragung von mehreren Frames 10 würde sich jedoch der Triggerimpuls 40 innerhalb des Zeitschlitzes 50 verschieben, und zwar würde er im Vergleich zu der Übertragung im vorigen Frame 10 früher erfolgen, wenn der Abstand der Triggerimpulse 40 kürzer als die Länge des Frames 10 wäre, und später als bei der Übertragung im vorigen Frame 10, wenn der Abstand der Triggerimpulse 40 größer als die Länge des Frames 10 wäre. Aus dem Vergleich der Positionen des Triggerimpulses 40 in jeweils zwei aufeinanderfolgenden Frames 10 kann somit auf die Unterschiede zwischen Abstand der Triggerimpulse 40 und der Länge des Frames 10 geschlossen werden. Um zu gewährleisten, dass der Triggerimpuls 40 auch bei Abweichungen zwischen dem Abstand der Triggerimpulse 40 und der Länge des Frames 10 immer innerhalb des vorgesehenen Zeitschlitzes 50 übertragen wird, werden in Abhängigkeit von dem Abstand der Triggerimpulse 40 ein oder mehrere Stuff-Bits 70 direkt vor der ersten Bitlänge 20 eingefügt. Die Zahl der einzufügenden Stuff-Bits 70 wird dabei aus der Positionsverschiebung des Triggerimpulses 40 innerhalb des Zeitschlitzes 50 zwischen den vorhergehenden aufeinanderfolgenden Frames 10 bestimmt, da die Lage der Flanke des Triggerimpulses 40 relativ zum Frame 10 innerhalb des Zeitschlitzes 40 aus den vorhergehenden Frames 10 bekannt ist und ebenfalls erfasst wird, um welchen Betrag sich die Lage der Flanke des Triggerimpulses 40 verschoben hat. Maximal werden jedoch so viele Stuff-Bits 70 eingefügt, wie der Frame 10 Bits enthält, vorliegend also 60. Eine derart große Anzahl an Stuff-Bits 70 ist dann vonnöten, wenn die Position der Flanke des Triggerimpulses 40 innerhalb des Zeitschlitzes 50 im Vergleich zum vorhergehenen Frame 10 geringfügig früher als erwartet liegt. Müssen derartig viele Stuff-Bits 70 eingefügt werden, werden sie vorzugsweise gleichmäßig über mehrere Frames 10 verteilt eingefügt. Müssen beispielsweise fünfzig Stuff-Bits 70 eingefügt werden, werden diese bevorzugt nicht als ein Block von fünfzig Stuff-Bits 70 vor der nachfolgenden ersten Bitlänge 20, sondern beispielsweise in fünf aufeinander folgenden Frames 10 in Blöcken von jeweils zehn Stuff-Bits 70 oder in zehn aufeinander folgenden Frames 10 in Blöcken von jeweils fünf Stuff-Bits 70 eingefügt, um auch bei Einfügen einer großen Anzahl von Stuff-Bits 70 eine im wesentlichen gleichmäßige Datenübertragung zu gewährleisten.

Um die Stuff-Bits 70 auch zur Übertragung von Nutz-Information zu verwenden, werden, sobald die Zahl an Stuff-Bits 70 größer als oder gleich N ist, jeweils N Stuff-Bits 70 durch einen Synchronisations-Frame ersetzt. Derartige Synchronisations-Frames enthalten zusätzliche Informationen im Hinblick auf die Synchronisation zwischen Sender und Empfänger, beispielsweise eine vordefinierte Bitfolge, welche vom Empfänger erkannt und zur weiteren Synchronisation verwenden werden kann. Dabei sollte diese vordefinierte Bitfolge möglichst viele Bitwertwechsel und keinen Gleichanteil aufweisen, um eine möglichst zuverlässige Übertragung und Erkennung der Bitfolge vom Empfänger sowie eine möglichst genaue Synchronisation zu gewährleisten. Vorzugsweise ist N gleich 5 oder 6, da bereits eine Bitfolge von fünf oder sechs Bits ausreichend ist, um weitere Information bezüglich der Synchronisation zwischen Sender und Empfänger auszutauschen.

Das Verfahren wird vorzugsweise zur Übertragung von Daten zwischen einer Steuerung des Senders und Messeinheiten des Empfängers verwendet. Dabei sind die Messeinheiten insbesondere als Positionsmesseinheiten ausgebildet sind. Gerade für Positionsmesseinheiten wie beispielsweise Drehgeber sind die Zeitanforderungen besonders hoch, um eine exakte Positionsbestimmung gewährleisten zu können, so dass sich hier die exakte Synchronisation zwischen Triggerimpuls und Datenübertragung zwischen Sender und Empfänger besonders vorteilhaft auswirkt.

## Patentansprüche

1. Verfahren zur zeitlichen Synchronisation zwischen einem Triggerimpuls und einer Datenübertragung zwischen einem Sender und einem Empfänger, wobei bidirektional Daten zwischen dem Sender und dem Empfänger basierend auf der Übertragung von digitalen Frames (10) einer vorgegebenen Bitlänge übertragen werden, wobei in jedem Frame (10) eine vorgegebene Bitlänge (20) für die Sendung von Daten von dem Sender zum Empfänger, und eine vorgegebene Bitlänge (30) für die Sendung von Daten von dem Empfänger zum Sender vorgesehen sind, wobei parallel zur und unabhängig von der Übertragung der Daten zwischen dem Sender und dem Empfänger von dem Sender einen Triggerimpuls (40) zum Empfänger geschickt wird, welcher eine Datenaufnahme beim Empfänger auslöst,
**dadurch gekennzeichnet,**
**dass** jeder Frame (10) innerhalb der Bitlänge (20) einen Zeitschlitz (50) aufweist, in welchem weder von dem Sender an den Empfänger noch von dem Empfänger an den Sender Daten übertragen werden, und dass der Triggerimpuls (40) in diesem Zeitschlitz (50) von dem Sender an den Empfänger übertragen wird, dass der Triggerimpuls von dem Sender nicht-digitalisiert übertragen wird, und dass die Flanke des Triggerimpulses eine sofortige, unverzögerte Datenaufnahme beim Empfänger auslöst.

2. Verfahren nach Anspruch 1,
**dadurch gekennzeichnet, dass** die Länge des Zeitschlitzes (50) 3 bis 8 Bit beträgt.

3. Verfahren nach einem der vorhergehenden Ansprüche,
**dadurch gekennzeichnet, dass** die erste Bitlänge (20) und die zweite Bitlänge (30) durch einige Zeitverzögerungsbits (60), vorzugsweise 4 bis 7 Zeitverzögerungsbits (60), getrennt in dem Frame (10) angeordnet sind.

4. Verfahren nach einem der vorhergehenden Ansprüche,
**dadurch gekennzeichnet, dass** in Abhängigkeit von der Triggerimpulslänge ein oder mehrere Stuff-Bits (70), vorzugsweise direkt vor der ersten Bitlänge (20), eingefügt werden.

5. Verfahren nach Anspruch 4,
**dadurch gekennzeichnet, dass** die Stuff-Bits (70) über mehrere Frames (10) gleichmäßig verteilt eingefügt werden.

6. Verfahren nach Anspruch 4 oder 5,
**dadurch gekennzeichnet, dass**, falls die Zahl der Stuff-Bits (70) größer oder gleich N ist, jeweils N Stuff-Bits durch einen Synchronisations-Frame ersetzt werden.

7. Verfahren nach Anspruch 6,
**dadurch gekennzeichnet, dass** N gleich 5 oder 6 ist.

8. Verfahren nach einem der vorhergehenden Ansprüche,
**dadurch gekennzeichnet, dass** die Länge der ersten Bitlänge (20) mindestens 14 Bit beträgt.

9. Verfahren nach einem der vorhergehenden Ansprüche,
**dadurch gekennzeichnet, dass** die Länge der zweiten Bitlänge (30) 30 Bit beträgt.

10. Verfahren nach einem der vorhergehenden Ansprüche,
**dadurch gekennzeichnet, dass** die Länge eines Frames (10) wenigstens 60 Bit und maximal 120 Bit beträgt.

11. Verfahren nach einem der vorhergehenden Ansprüche,
**dadurch gekennzeichnet, dass** die Daten zwischen einer Steuerung des Senders und Messeinheiten des Empfängers ausgetauscht wird.

12. Verfahren nach Anspruch 11,
**dadurch gekennzeichnet, dass** die Messeinheiten als Positionsmesseinheiten ausgebildet sind.

13. Verfahren nach Anspruch 12,
**dadurch gekennzeichnet, dass** die Positionsmesseinheiten als Drehgeber ausgebildet sind.

14. System bestehend aus einem Sender und einem Empfänger,
zwischen welchen bidirektional Daten übertragen werden, wobei die Übertragung der Daten nach dem Verfahren gemäß einem der vorhergehenden Ansprüche abläuft.

15. System nach Anspruch 14,
**dadurch gekennzeichnet, dass** die Daten zwischen einer Steuerung des Senders und Messeinheiten des Empfängers ausgetauscht wird.

16. System nach Anspruch 15,
**dadurch gekennzeichnet, dass** die Messeinheiten als Positionsmesseinheiten ausgebildet sind.

17. System nach Anspruch 16,
**dadurch gekennzeichnet, dass** die Positionsmesseinheiten als Drehgeber ausgebildet sind.

## Claims

1. Method for temporal synchronisation between a trigger pulse and a data transmission between a transmitter and a receiver, wherein data are transmitted bidirectionally between the transmitter and the receiver based on the transmission of digital frames (10) of predefined bit length, wherein there is provided in each frame (10) a predefined bit length (20) for the transmission of data from the transmitter to the receiver and a predefined bit length (30) for the transmission of data from the receiver to the transmitter, wherein a trigger pulse (40) is sent from the transmitter to the receiver in parallel with and independently of the transmission of data between the transmitter and the receiver, said trigger pulse triggering a data recording at the receiver, **characterised in that** each frame (10) has within the bit length (20) a time slot (50) in which no data are transmitted either from the transmitter to the receiver or from the receiver to the transmitter, and **in that** the trigger pulse (40) is transmitted in this time slot (50) from the transmitter to the receiver, **in that** the trigger pulse is transmitted from the transmitter in non-digitised form, and **in that** the flank of the trigger pulse triggers an immediate, undelayed data recording at the receiver.

2. Method according to claim 1, **characterised in that** the length of the time slot (50) is 3 to 8 bits.

3. Method according to one of the preceding claims, **characterised in that** the first bit length (20) and the second bit length (30) are arranged in the frame (10) in a manner separated by a few time delay bits (60), preferably 4 to 7 time delay bits (60).

4. Method according to one of the preceding claims, **characterised in that**, depending on the length of the trigger pulse, one or more stuffing bits (70) are inserted, preferably directly before the first bit length (20).

5. Method according to claim 4, **characterised in that** the stuffing bits (70) are inserted in a manner uniformly distributed across a plurality of frames (10).

6. Method according to claim 4 or 5, **characterised in that**, if the number of stuffing bits (70) is greater than or equal to N, in each case N stuffing bits are replaced by a synchronisation frame.

7. Method according to claim 6, **characterised in that** N is equal to 5 or 6.

8. Method according to one of the preceding claims, **characterised in that** the length of the first bit length (20) is at least 14 bits.

9. Method according to one of the preceding claims, **characterised in that** the length of the second bit length (30) is 30 bits.

10. Method according to one of the preceding claims, **characterised in that** the length of a frame (10) is at least 60 bits and at most 120 bits.

11. Method according to one of the preceding claims, **characterised in that** the data are exchanged between a controller of the transmitter and measuring units of the receiver.

12. Method according to claim 11, **characterised in that** the measuring units are configured as position measuring units.

13. Method according to claim 12, **characterised in that** the position measuring units are configured as rotary encoders.

14. System consisting of a transmitter and a receiver, between which data are transmitted bidirectionally, wherein the transmission of the data takes place by the method according to one of the preceding claims.

15. System according to claim 14, **characterised in that** the data are exchanged between a controller of the transmitter and measuring units of the receiver.

16. System according to claim 15, **characterised in that** the measuring units are configured as position measuring units.

17. System according to claim 16, **characterised in that** the position measuring units are configured as rotary encoders.

## Revendications

1. Procédé de synchronisation d'une impulsion de déclenchement et d'une transmission de données entre un émetteur et un récepteur, selon lequel,
des données sont transmises de manière bidirectionnelle entre l'émetteur et le récepteur en fonction de la transmission de trames numériques (10) d'une longueur de bits donnée,
dans chaque trame (10), a une longueur de bits prédéfinie (20) pour l'émission de données de l'émetteur vers le récepteur et une longueur de bits donnée (30) pour l'émission de données du récepteur vers l'émetteur,
en parallèle à la transmission de données et indépendamment de celle-ci entre l'émetteur et le récepteur, l'émetteur envoyant une impulsion de déclenchement (40) vers le récepteur et cette impulsion déclenchant une réception de données dans le récepteur,
procédé **caractérisé en ce que**
- la longueur de bits (20) de chaque trame (10), comporte une fenêtre (50) dans laquelle ni l'émetteur, ni le récepteur, n'échangent de données, et
- l'impulsion de déclenchement (40) est transmise dans cette fenêtre de temps (50) de l'émetteur vers le récepteur,
- l'impulsion de déclenchement est transmise sous une forme non numérisée par l'émetteur, et
- le flanc de l'impulsion de déclenchement produit une prise de données immédiate retardée dans le récepteur.

2. Procédé selon la revendication 1,
**caractérisé en ce que**
la longueur de la fenêtre de temps (50) est de 3 à 8 bits.

3. Procédé selon l'une des revendications précédentes,
**caractérisé en ce que**
la première longueur de bits (20) et la seconde longueur de bits (30), sont séparées dans la trame, de préférence, par une temporisation (60)comprise entre 4 et 7 bits.

4. Procédé selon l'une des revendications précédentes,
**caractérisé en ce qu'**
un ou plusieurs bits d'occupation (70) sont insérés de préférence directement avant la première longueur de bits (20) en fonction de la longueur de l'impulsion de déclenchement.

5. Procédé selon la revendication 4,
**caractérisé en ce que**
les bits d'occupation (70) sont insérés de manière répartie régulièrement dans plusieurs trames (10).

6. Procédé selon la revendication 4 ou 5,
**caractérisé en ce qu'**
au cas où le nombre de bits d'occupation (70) est supérieur ou égal à N, on remplace chaque fois N bits d'occupation par une trame de synchronisation.

7. Procédé selon la revendication 6,
**caractérisé en ce que**
le nombre N est égal à 5 ou 6.

8. Procédé selon l'une des revendications précédentes,
**caractérisé en ce que**
la première longueur de bits (20) correspond à au moins 14 bits.

9. Procédé selon l'une des revendications précédentes,
**caractérisé en ce que**
la seconde longueur de bits (30) est égale à 30 bits.

10. Procédé selon l'une des revendications précédentes,
**caractérisé en ce que**
la longueur d'une trame (10) est d'au moins 60 bits et au maximum égale à 120 bits.

11. Procédé selon l'une des revendications précédentes,
**caractérisé en ce que**
les données sont échangées entre une commande de l'émetteur et des unités de mesure du récepteur.

12. Procédé selon la revendication 11,
**caractérisé en ce que**
les unités de mesure sont réalisées sous la forme d'unités de mesure de position.

13. Procédé selon la revendication 12,
**caractérisé en ce que**
les unités de mesure de position, sont réalisées sous la forme de générateurs de rotation.

14. Système composé d'un émetteur et d'un récepteur entre lesquels des données sont échangées de manière bidirectionnelle,
la transmission des données se faisant par le procédé de l'une des revendications précédentes.

15. Système selon la revendication 14,
**caractérisé en ce que**
les données sont échangées entre une commande de l'émetteur et des unités de mesure du récepteur.

16. Système selon la revendication 15,
**caractérisé en ce que**
les unités de mesure sont réalisées sous la forme d'unités de mesure de position.

17. Système selon la revendication 16,
**caractérisé en ce que**
les unités de mesure de position sont réalisées sous la forme de générateurs de rotation.
